# EUROPEAN PATENT APPLICATION

(11) **EP 2 723 085 A2**
(43) Date of publication of application: **23.04.2014**
(21) Application number: 12801417.2
(22) Date of filing: 14.06.2012
(51) Int. Cl.: H04N 21/2381, H04N 21/236

(54) **METHOD AND APPARATUS FOR COMPRISING CONTENT IN BROADCASTING SYSTEM**

(30) Priority: 14.06.2011 US 201161496741 P; 13.07.2011 US 201161507294 P
(71) Applicant: Samsung Electronics Co., Ltd., Suwon-si, Gyeonggi-do 443-742 (KR)
(72) Inventor: RHYU, Sung-Ryeul, Gyeonggi-do 443-742 (KR); PARK, Kyung-Mo, Gyeonggi-do 443-742 (KR); HWANG, Sung-Oh, Gyeonggi-do 443-742 (KR); SONG, Jae-Yeon, Gyeonggi-do 443-742 (KR)
(74) Representative: Nederlandsch Octrooibureau
(86) International application number: PCT/KR2012/004691
(87) International publication number: WO 2012/173402

(57) **Abstract**

The present invention relates to a method and an apparatus for comprising content of a broadcasting system. According to the present invention, a plurality of assets, which are transmitted from an upper layer and comprise a plurality of contents, are combined in a package, wherein setting information for multiplexing the plurality of assets is added to the package and relayed to a lower layer, and wherein the setting information comprises a list of the assets which are included in the package, composition information including information regarding relationships between the plurality of assets, and a transmission characteristic which is related to a transmission path for the plurality of assets.

## Description

### [Technical Field]

The present invention relates generally to a method and apparatus for creating content in a broadcasting system, and more particularly, to a method and apparatus for creating a package of content in a broadcasting system that provides IP based multimedia services.

### [Background Art]

It was common for a conventional broadcasting network to use Moving Picture Expert Group-2 Transport Stream (MPEG-2 TS) to transfer multimedia content. The MPEG-2 TS has been used as a representative transfer technology to transfer bitstreams multiplexed from a plurality of broadcasting programs (e.g., multiple coded video bitstreams) in an erroneous transfer environment. As an example, MPEG-2 TS is suitably used in digital television broadcasting of the multimedia age.

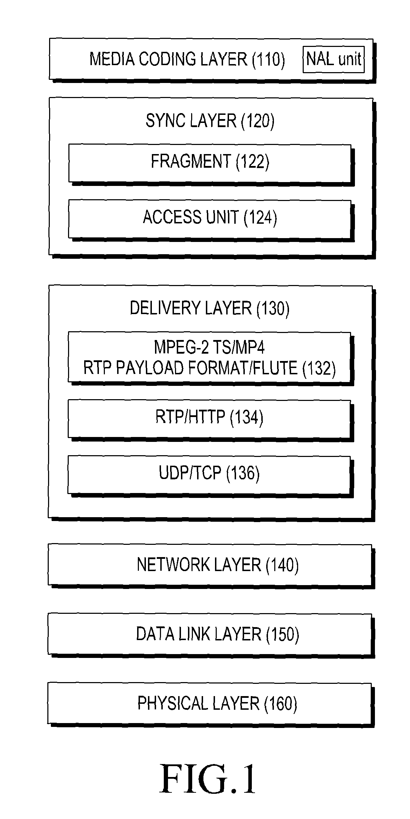

FIG. 1 depicts a conventional hierarchical structure for supporting the MPEG-2 TS.

Referring to FIG. 1, the hierarchical structure for supporting the MPEG-2 TS consists of a media coding layer 110, a sync layer 120, a delivery layer 130, a network layer 140, a data link layer 150, and a physical layer 160.

The media coding layer 110 and the sync layer 120 configure media data in a format easy to be used as basic units for recording and transmission. The delivery layer 130, the network layer 140, the data link layer 150, and the physical layer 160 configure data blocks in the format configured in the sync layer 120 to be multimedia frames for recording in a separate recording medium or transmission. The multimedia frames are transmitted to a subscriber's terminal via a predetermined network.

For this, the sync layer 120 consists of a fragment block 122 and an access unit 124, and the delivery layer 130 consists of MPEG-2 TS/MP4 unit 132, Real-time Transport Protocol/Hypertext Transfer Protocol (RTP/HTTP) unit 134, and User Datagram Protocol/Transmission Control Protocol unit (UDP/TCP) 136.

However, the MPEG-2 TS has several constrains on supporting multimedia services: unidirectional communication, transmission inefficiency due to fixed frame size, and unnecessary overhead occurrence when a transfer protocol dedicated to audio/video and the Internet protocol (IP) are used for transmission.

Thus, MPEG has newly proposed an MPEG Media Transport (MMT) standard as one of the multimedia transfer technologies for providing MPEG-based multimedia services. Especially, the MMT standard was introduced to overcome the foregoing constraints of MPEG-2 TS.

For example, the MMT standard may be employed for efficient transmission of hybrid content via a heterogeneous network. The hybrid content refers to a set of contents having multimedia elements, such as, videos, audios, applications, etc. The heterogeneous network refers to a network in which a broadcasting network and a communication network are mixed.

Furthermore, the MMT standard aims at defining a more IP-friendly transfer technology, the IP having been considered a basic technology in a transfer network for multimedia services.

Therefore, the MMT standard for providing an efficient MPEG transfer technology in a representative IP-based changing multimedia service environment is in progress of standardization with ongoing research.

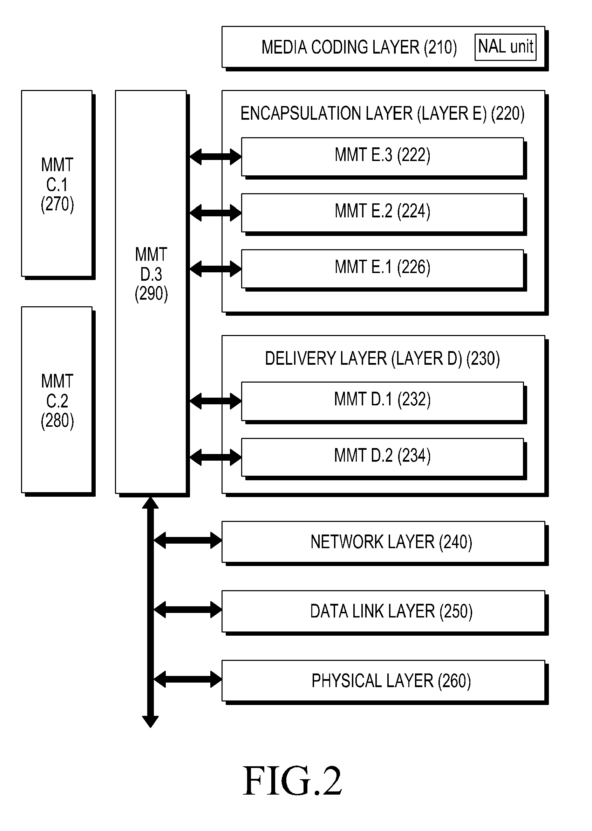

FIG. 2 depicts a hierarchical structure of the MMT system for transmitting multimedia frames based on multi-services/contents via the heterogeneous network.

Referring to FIG. 2, the MMT system for configuration and transmission of multimedia frames includes a media coding layer 210, an encapsulation layer (hereinafter, referred to as 'Layer E') 220, a delivery layer ('Layer D') 230 and 290, a network layer 240, a data link layer 250, a physical layer 260, and a control layer ('Layer C') 270 and 280.

The hierarchical structure has three technical areas: Layer E 220, Layer D 230 and 290, and Layer C 270 and 280, where the Layer E 220 is responsible for creation of the hybrid content, the Layer D 230 and 290 for efficient transmission of the hybrid content via the heterogeneous network, and the Layer C 270 and 280 for overall control for managing usage and transmission of the hybrid content.

The layer E 220 consists of an MMT E.3 222, an MMT E.2 224, and MMT E.1 226. The MMT E. 3 222 receives coded multimedia data from the media coding layer 210 to create fragments as smallest basic units for MMT services. The MMT E. 2 224 uses the fragments to create assets for MMT services. The MMT E. 1 226 combines the assets provided by the MMT E. 2 224 to create a package in a format for storage and transmission.

The layer D 230 consists of an MMT D.1 232, an MMT D.2 234, and MMT D.3 290. The MMT D. 1 232 is responsible for an application protocol (AP) that plays a similar role to the RTP or HTTP, the MMT D. 2 234 for a network layer protocol that plays a similar role to the UDP or TCP, and the MMT D. 3 290 for mutual optimization between each layer contained in the Layer E 220 and each layer contained in the Layer D 230.

The Layer C consists of MMT C. 1 270 and MMT C. 2 280. The MMT C. 1 270 provides information related to creation and usage of the hybrid content, and the MMT C. 2 280 provides information related to transmission of the hybrid content.

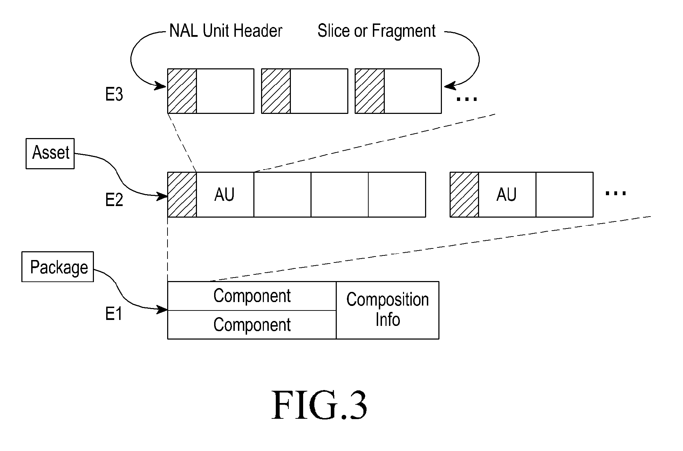

FIG. 3 shows a hierarchy of general data transfer.

Referring to FIG. 3, at a top layer, layer E3, of the Layer E on a transmitting end, content elements, such as, video, audio, etc., are encoded by a codec encoder, such as, an advanced video codec (AVC), a scalable video codec (SVC), etc., into e.g., network abstraction layer (NAL) units or fragments, which are then stored in asset units and forwarded to a lower layer, layer E2. Video streams, audio streams, etc., are representative examples of assets. The definition and configuration of assets forwarded from layer E3 to layer E2 are set by codecs in the conventional technology, so the present invention uses the layer E3 as is in the conventional technology.

Layer E2 organizes a plurality of assets, stores them in elementary stream (ES) units, and then forward them to a next lower layer, layer E1. Layer E1 directs relationships among and configuration of the content elements, such as, video, audio, etc., encapsulates them with the ES units into a format of package, and transfers the package to layer D1.

Layer D1 divides the packages into formats suitable for transmission and delivers them to a lower layer, which in turn delivers them to a next lower layer.

Meanwhile, a presentation comprised of visual-audio screens is a service provided in packages. The package combines assets therein, provides composition information about positions of the assets in time and space, and a transport characteristic for delivering what the package provides.

### [Disclosure]

### [Technical Problem]

The present invention provides a method and apparatus for efficiently creating content in a broadcasting system.

### [Technical Solution]

In accordance with one aspect of the present invention, there is provided a method for creating content in a broadcasting system that provides an Internet protocol (IP) based multimedia service. The method includes combining multiple assets into a package, the multiple assets being transferred from an upper layer and having multiple contents; and adding configuration information for multiplexing the multiple assets to the package and then transferring the package to a lower layer. The configuration information may include a list of assets included in the package, composition information including information about relationships among the multiple assets, and a transport characteristic relating to delivery paths of the multiple assets.

In accordance with another aspect of the present invention, there is provided an apparatus for creating content in a broadcasting system that provides an Internet protocol (IP) based multimedia service. The apparatus includes an encapsulation layer for combining multiple assets into a package, the multiple assets being transferred from an upper layer and having multiple contents, and adding configuration information for multiplexing the multiple assets to the package and then transferring the package to a lower layer. The configuration information may include a list of assets included in the package, composition information including information about relationships among the multiple assets, and a transport characteristic relating to delivery paths of the multiple assets.

### [Advantageous Effects]

According to the present invention, information about assets to be included in a package is inserted into the package in forming the package with the assets, so that when receiving and then parsing the package, one can know what the package is, how to decode it, and how to present it.

### [Description of Drawings]

FIG. 1 depicts a conventional hierarchical structure for supporting MPEG-2 TS;
FIG. 2 conceptually illustrates an MMT service provided by an MMT standard-based broadcasting system;
FIG. 3 illustrates a hierarchy of general data transfer in a broadcasting system;
FIG. 4 depicts a structure of configuration information contained in a package; and
FIG. 5 is a diagram representing a broadcasting service scenario, according to an embodiment of the present invention.

### [Mode for Invention]

Operating principles of embodiments of the present invention will now be described with reference to accompanying drawings. Descriptions of some well-known technologies that possibly obscure the invention will be omitted, if necessary. Further, terms, as will be mentioned later, are defined by taking functionalities of the present invention into account, but may vary depending on certain practices or intentions of users or operators. Thus, the definition of the terms should be given based on the descriptions throughout this specification.

The present invention provides a method for creating a package by combining a plurality of assets.

The plurality of assets are combined into a plurality of packages, the packages containing the assets being provided for a multimedia service. A package provides a scheme for using the assets therein as well as assets contained in other packages. A plurality of packages from various service providers are worked together to provide a mashed-up service.

A content provider may configure a package by combining associated assets and configuration information.
A receiver loads the package and parses the configuration information to find out what the package is, how to decode the package, and where to provide the package.

Layer E1 provides information about how to multiplex the assets in the package. The assets are not physically multiplexed, but virtually multiplexed by the information. Layer D looks up the information, multiplexes parts of different assets into packets, and transfers the packets.

The layer E1 provides fragmentations of the assets into pieces. The plurality of pieces of the assets are arranged in consumption order by taking progressive downloads of the packages into account.

The service provider broadcasts and transmits great amounts of packages at a time. The layer E1 provides IDs as identification information of packages. For example, a package may be identified by a combination of a service provider ID, a content ID, an episode number of content, etc. The identification information of the package may also include metadata information, such as, a service title, a name of an actor/actress, or a synopsis, readable by a consumer.
The layer E1 provides a scheme for positioning the assets in time and space with composition information contained in the package. Positions of assets for presentation may be changed by an event, such as, a chapter thumbnail selection, and a selected asset may be presented in various ways (e.g., in a full screen mode) by triggering the event.

Assets contained in the package have different relationships among each other. Such relationships may be largely classified into a combinable relationship, a mutually exclusive relationship, a dependency relationship, and an adaptive relationship.

Some assets in an alternative relationship as the combinable relationship have different contexts and media types. For example, videos, audios, and subtitles are in the alternative relationship. Thus, a user may make multiple selections, and use them simultaneously.
Some assets in a switching relationship as the mutually exclusive relationship have different contexts but the same media type. For example, English audio and French audio Assets are in the switching relationship. The user may select either one of them but not both at a time.

Some assets in the alternative relationship as the dependency relationship may have an additional relationship, such as, pair and primary selections. For example, a baseball game may have a plurality of views, such as, hitter and pitcher views. The hitter view has hitter audio, and the pitcher view has pitcher audio. If the four assets belong to a baseball game package, the pair relationships between the hitter view and the hitter audio and between the pitcher view and the pitcher audio need to be clearly described in order to provide seamless view changes. As another example, in a case of a package having three assets of video, audio, and subtitle, the video and audio assets need to have more importance than the subtitle asset because the subtitle without video is useless.

Some assets in the adaptive relationship have the same context and the same media type. For example, a video of high quality and an audio of middle quality are in the adaptive relationship. The receiver selects one of the assets in the adaptive relationship so as to display the same context adaptively to network bandwidth or device capability.

Groups of assets are in a plurality of relationships. A group in a relationship may be more important than another group in another relationship. Descriptions of the groups are readable by machines or humans.
Meanwhile, the layer E1 provides transport characteristics (TCs). A TC gives a criterion to be considered for each asset. One or more assets having the same TC may be transferred via the same delivery path. Fore example, videos and audios having a "lossy" TC that allows a little loss are transferred according to Real-time Transfer Protocol (RTP), and widgets and applications having a "lossless" TC that does not allow any loss are transferred according to Hyper Text Transfer Protocol (HTTP).

If assets or all packages are protected, a signaling mechanism for error resilience, such as, retransmission or automatic repeat request (ARQ), application layer-forward error correction (AL-FEC), etc. is provided. In this case, a signaling mechanism for a service characteristic for consumption, such as, right management or content protection, is also provided. Furthermore, a free space may be secured in advance for storing additional information of license and scheme dependent data.

With foregoing operations performed in the layer E1, configuration information of the package are created and combined with assets into the package.

The package has functions and operations for employing the configuration information. The configuration information consists of a TC, composition information and a list of assets. Description information describes the package and assets. The composition information facilitates the usage of assets. The TC information gives a hint to transfer assets.

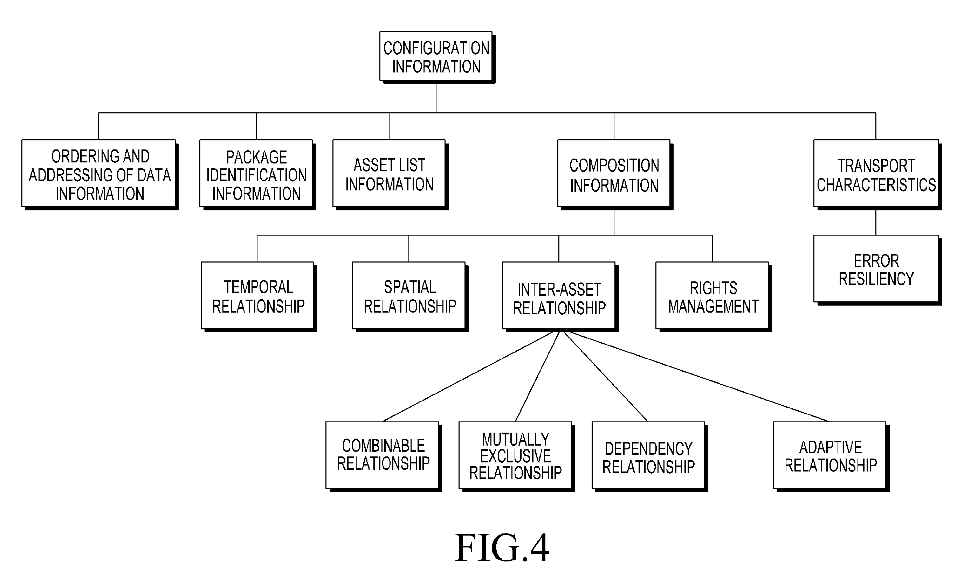

FIG. 4 shows a structure of the configuration information, according to an embodiment of the present invention.

Referring to FIG. 4, the configuration information includes ordering and addressing of data information, package identification information, asset list information, composition information, and transport characteristics (TCs).

Data in the package may be arranged in order of consumption or priority. Thus, the package provides the ordering and addressing of data information, which are information about physical positions of data within the package.

The package identification information includes machine-readable information, such as, a service provider ID, a content ID, a genre, and an episode number of the package. The package identification differentiates one package from another. The package identification also includes human-readable information, such as, a service title, a name of an actor/actress, a synopsis, etc. This information helps the user select a package for use.

The asset list information provides a list of assets included in one package. Data within a package payload corresponds to the assets, which should be enumerated in the asset list.

Composition information specifies how the assets are to be used by signaling relationships among the assets. There are three major types of the relationships that describe the structure of assets: a temporal relationship, a spatial relationship, and inter-asset relationship.

The temporal relationship is a relationship between an asset timeline and a package timeline. All or part of running time of assets may be at several time points or in duration of the package timeline.

The spatial relationship is a relationship between asset and package presentation areas. Positions of assets in the presentation may be changed by an event, such as, a chapter thumbnail selection, and a selected asset may be presented in a different mode, such as, in a full screen mode, triggered by an event.

Multiple relationships lies in among multiple assets. In order to select one or more assets from the multiple assets, additional information that describes relationships among the assets is required. There are three inter-asset relationships: combining, mutually exclusive, dependency relationships. Selecting an asset without any relationship is performed by a user's decision or client's execution alone.

The combinable relationship is a relationship for allowing one or more to be selected from a plurality of selectable ones. Assets in the combinable relationship may have different contexts and different media types.

The mutually exclusive relationship is a relationship for allowing only one to be selected from the plurality of the selectable ones. Assets in the mutually exclusive relationship have different contexts but the same media type.

The dependency relationship is a relationship that requires an additional asset in selecting an asset. Some assets may have the dependency relationship with other assets which are not in the mutually exclusive relationship.

An adaptive relationship is a relationship among multiple assets or M units having the same context and the same media type. Switching from an asset to another, which are in the adaptive relationship, conceptually keeps the same context.

Right management information specifies whether right management required by an asset should be taken into account. Signaling of a particular right management algorithm and associated information is described within the composition information as an asset attribute.

The TC information gives a hint to transfer assets. An asset may have a set of one or more TC information. The package does not have any delivery path for internal resources, assets. Assets within the package have the TC information to help each service provider determine the delivery path. For example, a broadcasting company or a home server may use the same package. There may be different delivery paths for providing the same asset within the same package, such as, a broadcasting radio frequency (RF) channel provided by the broadcasting company and an RTP address provided by the home server.

Error resilience information is one of the TC information. The TC information for assets may be "lossless" or "lossy". Additional technologies for lossless transfer, such as, retransmission, ARQ, AL-FEC, may be specified in the TC information. However, the use of a particular algorithm for the lossless transfer may not described in the package, but the service provider may select to signal the particular algorithm through a C-layer packet.

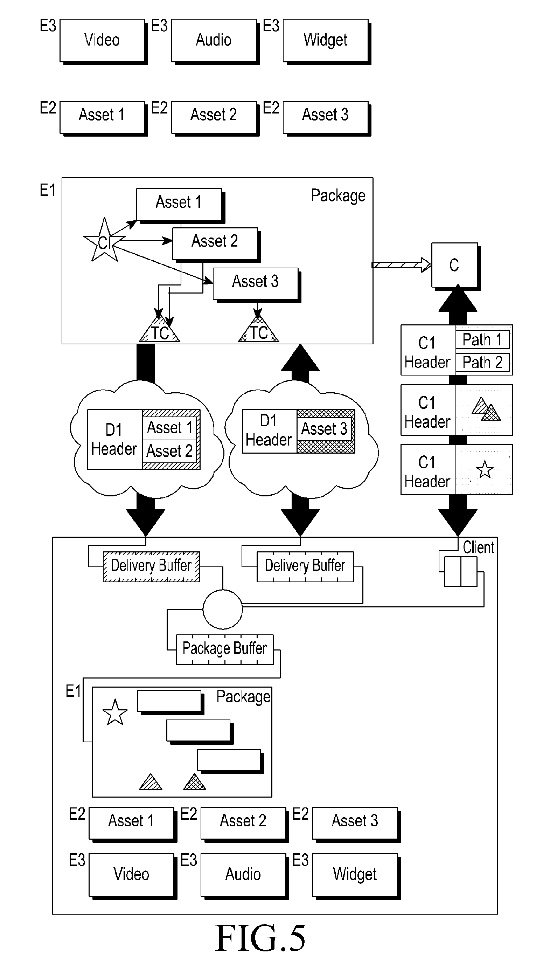

FIG. 5 is a diagram representing a broadcasting service scenario, according to an embodiment of the present invention.

Referring to FIG. 5, a service/content provider generates and encodes videos, audios, sound effects, and widgets at layer E3, and forms them as assets at layer E2. At layer E1, composition information and TCs for assets are formed together into a package. Service discovery information for the package may be inserted into an ending part or a middle part of the package, and later, updated service discovery information may be broadcasted or pushed to a client device.

The service discovery information may have information enough to discover the package and deliver a route for transferring an asset based on a manifest, composition information, and a TC.

The package is split into pieces, which are then transferred through layers C and D. The information, such as, the manifest, the composition information, and the TC, is transferred through the layer C, and data such as assets is transferred through the layer D. The client device receiving the information and data reconstructs the package at layer E1 of the client device.

Since the assets are transferred through delivery paths conforming to the TC, assets from different routes arrive at different times with different delays. For example, video and audio assets are transferred via the broadcasting network while a widget is transferred via the HTTP because the widget requires lossless connection. If congestion occurs, widgets may not be used until the buffer for video and audio assets is filled up. It is not easy to select whether to stop playing video/audio or ignore downloading/running the widgets. Accordingly, Buffer Management Policy (BMP) is required to decide whether a player of the client device stops reproducing, plays without delayed assets, or plays when the delayed assets become available.

The package consists of asset(s), the manifest, the composition information, the TC, the signaling of DRM technology, and DRM dependent information. The manifest is a list of assets, including structural description and physical assignments within the package for assets.

Methods of creating the package will now be described.

One method is based on an MPEG-2 TS/Simple Aggregation format. In this case, package elements are classified by types and encapsulated in a payload. Since the manifest exists in multiple points of time and the assets may be added at any time, the package elements may have dynamic configurations. For example, all broadcast packages may have a letter box type of news about a presidential election. However, In this case, it is difficult finding a desired asset without observing the packages from beginning to end.

Another method is based on an ISOBMFF/MPEG-21 file format. In this case, 'moov' is allowed only at one point of time, so the package structure is fixed and may not be changed dynamically. In addition, since DID and 'iloc' in 'meta' are also allowed only at one point of time, updating of the asset structure is not allowed. Movie fragments may be used to add content created in real time, however, any new track is not allowed to be added because all 'treck' IDs are defined in advance within 'trex' in 'mvex'.

Since ZIP is a simple format and has a scheme for describing a manifest placeholder and the structure of a file system, once the assets are filed, putting their elements into a ZIP file is simple. The composition information, the TC, and the BMP may have designated names for easy handling of a registered file. However, content created in real time is not suitable to have the ZIP. A plurality of ZIPs for live broadcasting requires file names and their versions to handle assets and packages, which may cause an overhead at the transport layer.

Followings are requirements of an MMT package.
First, content created in real time should be provided.

Second, assets should be added and the structural description of the assets should be updated.

Third, positions of the assets within the package should be provided.

Fourth, identification information about the package and the continuity of the package should be provided.

Considering the requirements, a package format may be provided as follows:

**<Table 1>**

| |
|---|
| ```
  //header
  //identifier block
  - brand identifier(32) //'pakg'
  - content/service provider identification(10)
  - Package identification(18)
  - sequence number(4)
  /*
  - brand identifier identifies that this file is MMT E.1 Package.
  - Content provider, service provider has their unique identifier.
  - Package has unique identifier and expression format depends on provider.
  - Sequence number is to identify back and forth relationship of consecutive Packages.
  */
  //general information
  - timescale(16)
  - duration(16) //0, if unlimited
  /*
 - timescale is an integer that specifies the time-scale for this media; this is the nu
 mber of time units that pass in one second.
 - duration is an integer that declares the duration of this media (in the scale of the
   timescale).
  */
  //flag indicators
 - CompositionInformation_AssetID(32) //0, if doesn't exist
 - TransportCharacteristics_offset(16) //0, if doesn't exist
 - BufferManagementPolicy_offset(16) //0. if doesn't exist
 /*
 - CI is carried as one type of Asset. CompositionInformation-AssetID specifies AssetID
  of CI Asset in Manifest block. Value 0 means that this Package has no CI. Any consecu
  tive Package that uses CI from prior Package should specify AssetID of CI Asset in pri
 or Pacakge.
 - TransportCharacteristics_offset specifies Package offset of TC.
 - BufferManagementPolicy_offset specifies Package offset of BMP.
 */
 //Manifest block
 - offset_size (4)
 - length_size (4)
 - base_offset_size (4)
 - reserved (4)
 - asset_count (16)
 - for(i=0;i<asset_count;i++){
      - asset_id(32)
      - asset_type (4) //video/audio/text/app/widget/CI/···
``` |
| ```
      - reserved (4)
      - base_offset (base_offset_size*8)
      - extent_count (16)
      - for(j=0;j<extent_count;j++){
          - extent_offset (offset_size*8)
          - extent_length (length_size*8)
      }
 }.
 /*
  - asset_count: number of Assets that are carried by this Package.
  - asset_type: type of Asset.
   Value for type of Asset:
   0: CI
   1: Video
   2: Audio
   3: Text
   4: Timed Metadata
   5: Widget
   6: Application
   7∼255: reserved
 */
 //Transport Characteristics Block (optional)
 - asset_count (16)
 - for (i=0; i<asset_count; i++){
     - asset_id (32)
     - transport_chracteristics (8)
 }
 /*
 - Value for TC:
  0: Lossless
  1: Lossy
  2∼7: reserved
 */
 //Buffer Management Policy Block (optional)
 - asset_count (16)
 - for (i=0; i<asset_count; i++){
     - asset_id (32)
     - buffer_management_policy (8)
 }
 /*
 - Value for BMP:
  0: pause_when_unavailable
  1: discardable
  2: ignore_and_resume_download
  3: store_for_later_reuse
  4∼7: reserved.
 */
 //end of header
 //payload
 - assets()
 //end of payload
``` |

Another package format may be provided as follows:

**<Table 2>**

| |
|---|
| ```
 //header
 header(){
     Package_identification_block(){
          Package_identification_scheme_type (8)
          Package_identification_length (8)
          Package_identification (content_identification_length*8)
     }
 /*
 Identification of Pacakge can be generalized by using scheme_id and value. Existing id
 entification scheme can be used.
 */
     Composition_Information_block(){
          Composition_Information_scheme_type(8)
          Composition_Information_length(16)
          Composition_Information(Composition_Information_length*8)
     }
 /*
``` |
| ```
 Use of Composition Information can be generalized by using scheme_id and value. Existi
 ng identification scheme can be used.
 */
     Manifest_block(){
          asset_count (16)
          for (i=0; i<asset_count; i++){
              asset_id_scheme_type (8)
              asset_id_length (16)
              asset_id(asset_id_length*8)
               transport_characteristic_id (8)
              asset_type (4) video/audio/text/app/widget/CI
              reserved (3)
              asset_location (1) //0: internal, 1:external
               if (asset_location == 0){
                   offset_size (4)
                   length_size (4)
                   base_offset_size (4)
                   reserved (4)
                   asset_count (16)
                   for (j=0; j<asset_count; j++){
                        base_offset (base_offset_size*8)
                        extent_count (16)
                        for(k=0; k<extent_count; k++){
                            extent_offset (offset_size*8)
                            extent_length (length_size*8)
                        }
                   }
              }
``` |
| ```
              else{
                   asset_location_legnth(8)
                   asset_location(asset_location_length*8)
              }
          }
      }
     Transport_Characteristics_block(){
          transport_characteristics_count (4)
          for (i=0; i<transport_characteristics_count; i++){
              transport_characteristics ()
          }
     }
     Buffer_Management_Policy_block(){
          buffer_management_policy_count (4)
          for (i=0; i<buffer_management_policy_count; i++){
               buffer_management_policy ()
          }
     }
 }
 //end of header
 //payload
     payload(){
          assets()
 }
 //end of payload
``` |

Several embodiments of the present invention have been described, but it will be understood that various modifications can be made without departing the scope of the present invention. Thus, it will be apparent to those ordinary skilled in the art that the invention is not limited to the embodiments described, but can encompass not only the appended claims but the equivalents.

## Claims

1. A method for creating content in a broadcasting system that provides an Internet protocol (IP) based multimedia service, the method comprising:
combining multiple assets into a package, the multiple assets being transferred from an upper layer and having multiple contents; and
adding configuration information for multiplexing the multiple assets to the package and then transferring the package to a lower layer,
wherein the configuration information comprises a list of assets included in the package, composition information including information about relationships among the multiple assets, and a transport characteristic relating to delivery paths of the multiple assets.

2. The method of claim 1, wherein the relationships among the multiple assets comprise at least one of a combinable relationship, a mutually exclusive relationship, a dependency relationship, and an adaptive relationship.

3. The method of claim 1, wherein the composition information further comprises a temporal relationship and a spatial relationship for positioning the assets in time and space.

4. The method of claim 2, wherein assets in the combinable relationship have different contexts and different media types.

5. The method of claim 2, wherein assets in the mutually exclusive relationship have different contexts but the same media type.

6. The method of claim 2, wherein assets in the dependency relationship are selected in pars or have different priorities.

7. The method of claim 2, wherein assets in the adaptive relationship have the same context and the same media type.

8. An apparatus for creating content in a broadcasting system that provides an Internet protocol (IP) based multimedia service, the apparatus comprising:
an encapsulation layer for combining multiple assets into a package, the multiple assets being transferred from an upper layer and having multiple contents, and adding configuration information for multiplexing the multiple assets to the package and then transferring the package to a lower layer,
wherein the configuration information comprises a list of assets included in the package, composition information including information about relationships among the multiple assets, and a transport characteristic relating to delivery paths of the multiple assets.

9. The apparatus of claim 8, wherein the relationships among the multiple assets comprise at least one of a combinable relationship, a mutually exclusive relationship, a dependency relationship, and an adaptive relationship.

10. The apparatus of claim 8, wherein the composition information further comprises a temporal relationship and a spatial relationship for positioning the assets in time and space.

11. The apparatus of claim 9, wherein assets in the combinable relationship have different contexts and different media types.

12. The apparatus of claim 9, wherein assets in the mutually exclusive relationship have different contexts but the same media type.

13. The apparatus of claim 9, wherein assets in the dependency relationship are selected in pars or have different priorities.

14. The apparatus of claim 9, wherein assets in the adaptive relationship have the same context and the same media type.
